# FASCICULE DE BREVET EUROPEEN

(11) **EP 1 726 079 B1**
(45) Date de publication et mention de la délivrance du brevet: **25.07.2007**
(21) Numéro de dépôt: 05731011.2
(22) Date de dépôt: 24.02.2005
(51) Int. Cl.: H02K 15/06, H02K 3/12, H02K 15/04

(54) **METHODE D'INSERTION D'UN BOBINAGE ONDULE DANS UN STATOR DE MACHINE ELECTRIQUE TOUNANTE POLYPHASEE ET SON STATOR ASSOCIE**
VERFAHREN ZUM EINSETZEN EINER WELLENFÖRMIGEN WICKLUNG IN EINEM STATOR EINER ELEKTRISCHEN MEHRPHASENROTATIONSMASCHINE UND ZUGEHÖRIGER STATOR
METHOD OF INSERTING AN UNDULATING WINDING INTO A STATOR OF A POLYPHASE ROTATING ELECTRICAL MACHINE, AND ASSOCIATED STATOR

(30) Priorité: 24.02.2004 FR 0401824
(43) Date de publication de la demande: 29.11.2006
(73) Titulaire: VALEO EQUIPEMENTS ELECTRIQUES MOTEUR, 94017 Créteil Cedex (FR)
(72) Inventeur: CHOCHOY, Jean-Pierre, F-62240 Cremarest (FR)
(74) Mandataire: de Lambilly Delorme, Marie Pierre
(86) Numéro de dépôt international: PCT/FR2005/000433
(87) Numéro de publication internationale: WO 2005/091474

(56) Documents cités:
- EP-A- 1 294 082
- US-A- 4 864 715

## Description

### Domaine de l'invention

L'invention concerne en général les machines électriques tournantes du type polyphasé, telles que les alternateurs ou les alterno-démarreurs de véhicules automobiles.

Plus précisément, l'invention concerne selon un premier aspect une méthode d'insertion d'un bobinage ondulé dans un stator de machine électrique tournante, telle qu'un alternateur ou un alterno-démarreur de véhicule automobile, le stator comprenant un paquet de tôles troué centralement et présentant un axe de symétrie et des encoches axialement traversantes ménagées dans une face radialement interne du paquet de tôles, ces encoches offrant une pluralité de positions de réception étagées radialement, le bobinage comprenant une pluralité d'enroulements de phase constitués chacun d'un fil continu électriquement conducteur, la méthode comprenant les étapes suivantes :
1/ mise en forme de chaque enroulement, le fil de celui-ci étant conformé en une succession de créneaux reliés par des segments de liaison, chaque créneau comprenant deux branches latérales en regard l'une de l'autre destinées à s'insérer chacune à une position de réception d'une encoche, et une branche de tête reliant les deux branches latérales;
2/ mise en place des enroulements sur un outil d'insertion
3/ insertion des spires dans les encoches du stator

### Etat de la technique

Des méthodes de ce type sont connues de l'art antérieur par exemple par le document US A 4 864 715. Dans ce document chaque enroulement de phase comporte plusieurs spires et les phases sont placées successivement sur l'outil d'insertion en forme de roue réceptrice, puis insérées dans les encoches du paquet de tôles à l'aide d'un outil comportant des organes expulseurs conformés pour être déplaçable radialement. L'insertion est réalisée phase par phase.

On notera que la roue réceptrice à une épaisseur sensiblement égale à celle du stator.

Les stators formés par cette méthode présentent des deux côtés du paquet de tôles des chignons très denses, offrant une forte résistance à la circulation de l'air. En outre, les chignons sont non symétriques, l'un des chignons étant de hauteur axiale supérieure à celle de l'autre chignon, ce qui est également défavorable pour la circulation de l'air de refroidissement de ces chignons.

Par ailleurs, le taux de remplissage des encoches, c'est-à-dire le rapport entre la section du fil conducteur nu, usuellement en cuivre, et la section complète de l'encoche dans laquelle est monté un isolant d'encoche intervenant entre les bords des encoches et les fils, est plus élevé mais les efforts nécessaires à l'insertion des fils conducteurs dans les encoches sont très importants et peuvent, dans certaines conditions, nuire à la qualité du produit car les interactions entre les fils conducteurs sont nombreuses et divergentes.

Plus précisément la phase insérée la dernière doit pousser les phases insérées précédemment. Les efforts sont mal transmis d'une phase à une autre.

Dans certaines conditions cela peut nuire à la qualité du produit.

### Objet de l'invention

Dans ce contexte, la présente invention a pour but de pallier les défauts mentionnés ci-dessus.

A cette fin, la méthode de l'invention, par ailleurs conforme à la définition générique qu'en donne le préambule ci-dessus, est essentiellement caractérisée en ce que l'étape 2/ de mise en place des enroulements est réalisée sur un outil d'insertion cylindrique, chaque enroulement constituant plusieurs spires autour de l'outil d'insertion, ces spires se superposant dans un ordre déterminé,et en ce que les enroulements sont enroulés autour de l'outil d'insertion en même temps, les spires qui se succèdent dans ledit ordre déterminé d'enroulement appartenant alternativement aux différents enroulements.

Suivant une caractéristique l'étape 3/ d'insertion des spires dans les encoches du stator est réalisée en ordre inverse de l'ordre d'enroulement, les branches latérales de ces spires occupant progressivement des positions radialement plus intérieures ,

Grâce à l'invention on peut insérer toutes les phases en même temps et on augmente encore le taux de remplissage des encoches car notamment le positionnement des branches latérales dans les encoches est bien maîtrisé pendant le transfert des spires de l'outil d'insertion vers les encoches du stator.
En outre le même outil d'insertion peut être utilisé pour des stators ayant un paquet de tôles de longueur différente.

Dans un mode de réalisation possible de l'invention, l'ordre d'enroulement comprend une succession de séquences identiques, chaque séquence étant constituée d'une spire de chaque enroulement.

Selon une autre caractéristique avantageuse, les créneaux s'étendent sur l'outil d'insertion dans des plans respectifs parallèles à l'axe de symétrie de l'outil d'insertion, ou faiblement inclinés par rapport à cet axe.

De plus, l'étape 3/ d'insertion des enroulements dans les encoches est réalisée par déplacement de l'outil d'insertion le long de l'axe de symétrie du stator, c'est-à-dire axialement.

Avantageusement, les branches latérales d'un même créneau sont sensiblement droites et mutuellement parallèles.

De préférence, les branches de tête des créneaux sont cintrées et forment un chignon d'un premier côté axial du stator.

De même, les segments de liaison relient deux branches latérales respectives de deux créneaux voisins le long du fil et présentent une forme cintrée, ces segments formant un chignon d'un second côté axial du stator opposé au premier. Grâce à l'invention on peut obtenir des chignons non symétriques ou symétriques avec des passages d'air entre l'intérieur et l'extérieur des chignons.

Selon une autre caractéristique avantageuse, les branches de tête et/ou les segments de liaison formés à l'étape 1/ présentent des hauteurs croissantes ou décroissantes le long des enroulements pour obtenir un bon taux de remplissage des encoches.

Dans ce cas, les spires dont les branches latérales sont insérées en positions radialement extérieures de fonds d'encoches présentent des branches de tête et/ou des segments de liaison de hauteurs relativement plus grandes que les spires dont les branches latérales occupent des positions radialement intérieures.

Selon encore une autre caractéristique avantageuse, la méthode comprend après l'étape 3/ une étape 4/ de mise en forme des chignons par inclinaison des segments de liaison et/ou des branches de tête vers l'intérieur.

Alternativement, elle comprend après l'étape 3/ une étape 4/ de mise en forme des chignons par inclinaison des segments de liaison et/ou des branches de tête vers l'extérieur.

Par ailleurs, on notera que la méthode comprend, entre les étapes 1/ et 2/, une étape 1'/ de mise en forme locale du fil dans des zones de ce fil destinées à croiser d'autres fils, ou d'autres zones du même fil, une fois les enroulements insérés dans le stator.

De préférence, la mise en forme locale du fil consiste à déformer localement la section du fil, ou à courber localement le fil.

Dans ce cas, la mise en forme locale est réalisée par pincement, matriçage, ou moletage.

Avantageusement, le fil présente une section ronde, les encoches présentant une largeur circonférencielle multiple du diamètre du fil.

Dans un mode de réalisation possible, les encoches présentent une largeur circonférencielle correspondant au diamètre du fil, la branche occupant la position la plus radialement intérieure étant déformée par élargissement suivant une direction circonférencielle de manière à maintenir les branches occupant les autres positions à l'intérieur de l'encoche.

Dans un autre mode de réalisation possible, les encoches présentent une largeur circonférencielle égale à au moins deux diamètres du fil et présentent d'un côté radialement interne une ouverture partiellement obturée de deux côté opposés par deux redans axiaux, les branches occupant les encoches étant maintenues à l'intérieur de celle-ci par une cale plate en appui sur les redans d'un côté intérieur de l'encoche.

De plus, les encoches présentent une profondeur radiale multiple du diamètre du fil.

Enfin, le bobinage peut être de type ondulé simple ou de type ondulé réparti.

Selon un second aspect, l'invention concerne un stator de machine électrique tournante polyphasée, telle qu'un d'alternateur ou un alterno-démarreur de véhicule automobile, ce stator comprenant un paquet de tôles troué centralement présentant un axe de symétrie, des encoches traversantes axialement ménagées dans une face radialement interne du paquet de tôles offrant chacune une pluralité de positions de réception étagées radialement, et un bobinage comprenant une pluralité d'enroulements de phase constitués chacun d'un fil continu électriquement conducteur ;
le fil de chaque enroulement étant conformé en une succession de créneaux reliés par des segments de liaison, chaque créneau comprenant deux branches latérales en regard l'une de l'autre venant s'insérer chacune à une position de réception d'une encoche, et une branche de tête reliant les deux branches latérales; chaque enroulement constituant plusieurs spires autour du stator ;
les spires des enroulements étant insérées dans les encoches dans un ordre déterminé, les branches latérales de ces spires occupant progressivement des positions radialement plus intérieures ;
caractérisé en ce que les spires qui se succèdent dans ledit ordre déterminé appartiennent alternativement aux différents enroulements.

Avantageusement, l'ordre déterminé comprend une succession de séquences identiques, chaque séquence étant constituée d'une spire de chaque enroulement.

De préférence, les branches latérales d'un même créneau sont sensiblement droites et mutuellement parallèles.

Par exemple, les branches de tête des créneaux sont cintrées et forment un chignon d'un premier côté axial du stator.

De plus, les segments de liaison relient deux branches latérales respectives de deux créneaux voisins le long du fil et présentent une forme cintrée, ces segments formant un chignon d'un second côté axial du stator opposé au premier.

Suivant une variante de réalisation, les segments de liaison et/ou les branches de tête constituant les chignons sont inclinés vers l'intérieur.

Alternativement, les segments de liaison et/ou les branches de tête constituant les chignons sont inclinés vers l'extérieur.

De préférence, le fil est mis en forme localement dans des zones de ce fil croisant d'autres fils ou d'autres zones du même fil.

Dans ce cas, la mise en forme locale du fil consiste à déformer localement la section du fil, ou à courber localement le fil.

Avantageusement, la mise en forme locale est réalisée par pincement, matriçage, ou moletage.

Selon une autre caractéristique avantageuse, le fil présente une section ronde, les encoches présentant une largeur circonférencielle multiple du diamètre du fil.

Dans une variante de réalisation, les encoches présentent une largeur circonférencielle correspondant au diamètre du fil, la branche occupant la position la plus radialement intérieure étant déformée par élargissement suivant une direction circonférencielle de manière à maintenir les branches occupant les autres positions à l'intérieur de l'encoche.

Dans une autre variante de réalisation, les encoches présentent une largeur circonférencielle égale à au moins deux diamètres du fil et présentent d'un côté radialement interne une ouverture partiellement obturée de deux côté opposés par deux redans axiaux, les branches occupant les encoches étant maintenues à l'intérieur de celle-ci par une cale plate en appui sur les redans d'un côté intérieur de l'encoche.

De plus, les encoches présentent une profondeur radiale multiple du diamètre du fil.

Enfin, le bobinage peut être de type ondulé simple ou de type ondulé réparti.

Bien entendu toutes les caractéristiques précitées peut être présentes isolément ou en combinaison.

### Brève description des dessins

D'autres caractéristiques et avantages de l'invention ressortiront clairement de la description qui en est faite ci-dessous, à titre indicatif et nullement limitatif, en référence aux figures annexées, parmi lesquelles :
- les figures 1A et 1B est des vues axiales d'une partie d'un stator, respectivement obtenu conformément à la méthode de l'art antérieur et conformément à la méthode de l'invention,
- les figures 2A et 2B sont des vues en perspective des stators des figures 1A et 1B,
- la figure 3 est une représentation schématique développée d'un enroulement de phase du stator des figures 1B et 2B, après mise en forme à l'étape 1/,
- la figure 4 est une représentation schématique développée de trois enroulements de phase du stator des figures 1B et 2B, montrant les zones de croisement de ces trois enroulements dans le stator après insertion, les cercles indiquant les zones de mise en forme locale,
- la figure 5 est une vue de côté de l'outil d'insertion après mise en place des enroulements sur cet outil à l'étape 2/,
- la figure 6 est une vue en perspective selon la flèche VI de la figure 5,
- les figures 7A et 7B sont des représentations schématiques illustrant l'étape 3/ d'insertion des spires dans les encoches du stator par déplacement axial de l'outil d'insertion,
- la figure 8 est une vue de côté du paquet de tôles et de l'outil d'insertion à l'étape 3/,
- la figure 9 est une vue en perspective selon la flèche IX de la figure 8,
- la figure 10 est une vue schématique de côté d'un stator obtenu conformément à l'invention, et
- les figures 11A, 11B et 11C sont des représentations schématiques des sections respectivement d'une encoche d'un stator de l'invention de largeur correspondant à un diamètre de fil, à deux diamètres de fil et d'une encoche d'un stator de l'art antérieur.

### Description d'exemples de réalisations de l'invention

La méthode d'insertion est adaptée à un bobinage ondulé 50 à insérer dans un stator 1 d'alternateur ou d'alterno-démarreur de véhicule automobile.

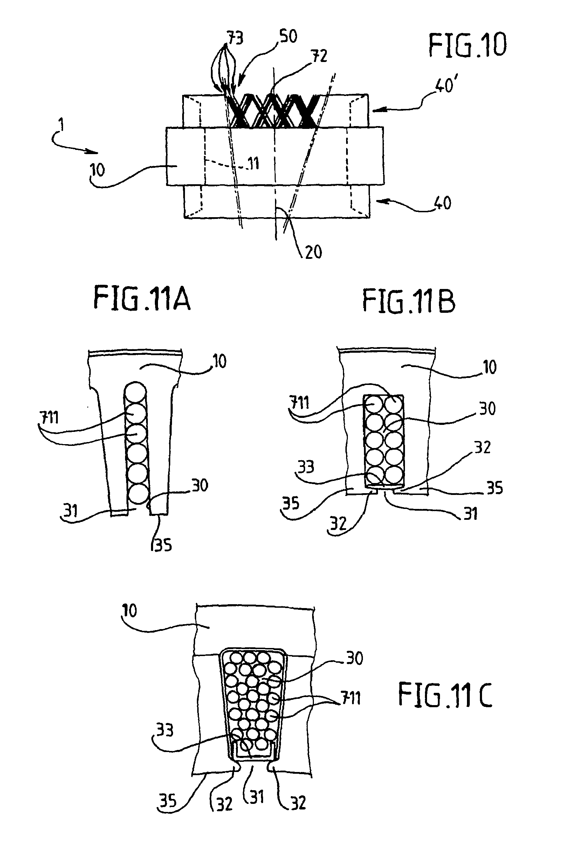

Le stator 1 comprend dans l'ensemble de réalisation un corps sous la forme d'un paquet de tôles 10 cylindrique présentant un axe de symétrie axiale 20 (figure 10), et des encoches axiales 30 ménagées dans une face radialement interne 11 du paquet de tôles 10. Les encoches 30 sont séparées les unes des autres par des nervures axiales 35 appelées dents (figures 11A, 11B).

Ces encoches 30 traversent axialement de part en part le paquet de tôles 10 troué centralement car elles s'étendent sur toute la longueur axiale du paquet de tôles 10 et sont ouvertes radialement d'un côté intérieur et aux deux extrémités axiales opposées. Ces encoches 30 offrent chacune une pluralité de positions de réception étagées radialement.

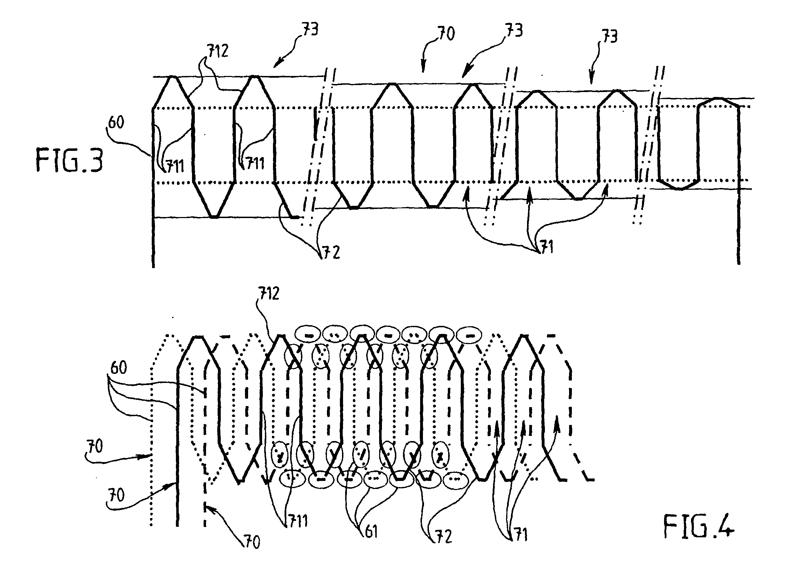

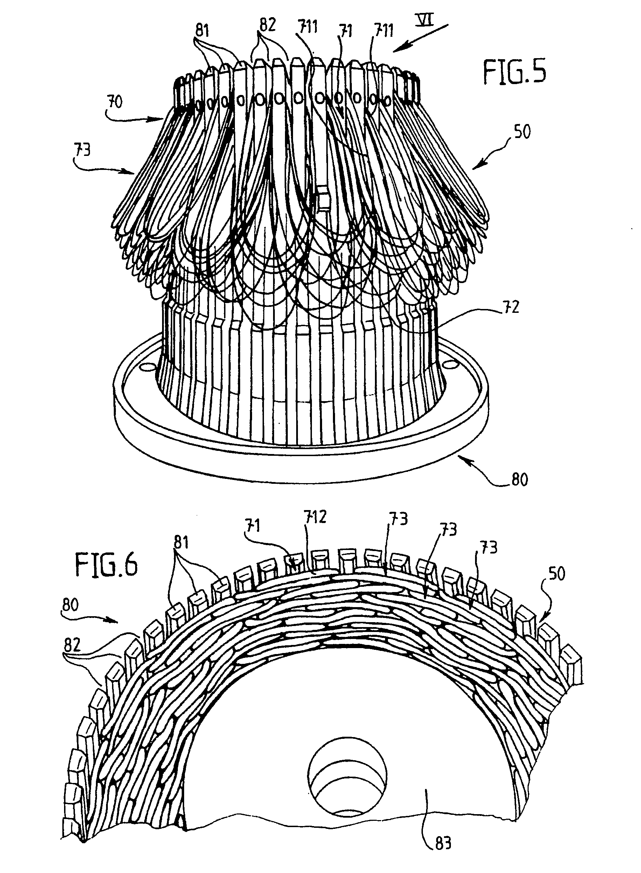

Le bobinage 50 comprend une pluralité d'enroulements de phase 70 constitués chacun d'un fil 60 continu électriquement conducteur (figures 3 et 4). Le fil est par exemple en cuivre recouvert d'un isolant tel que de l'émail. Chaque enroulement de phase 70 comporte plusieurs spires 73, une spire correspondant à un tour de corps de stator.

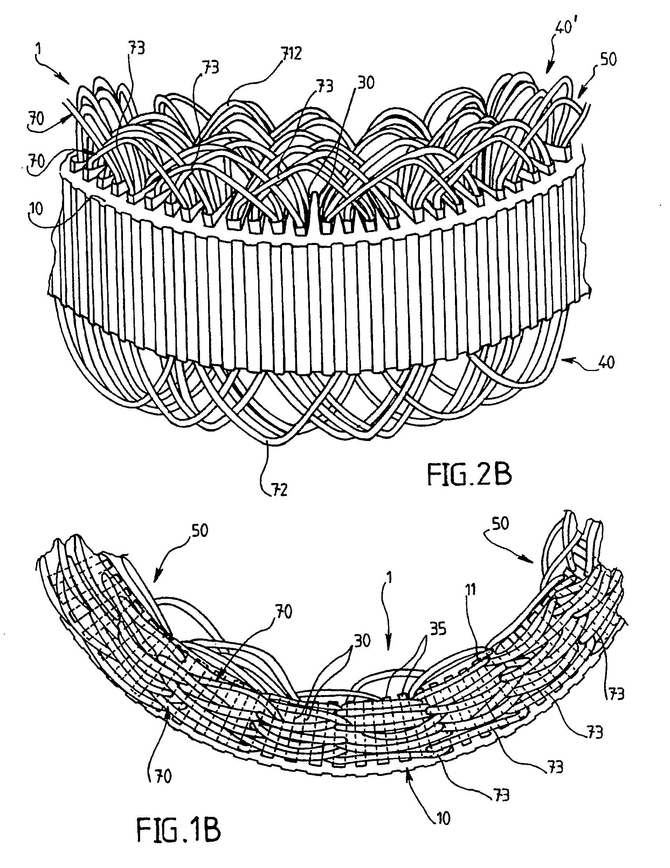

De manière connue un isolant d'encoche, visible à la figure 2B, est interposé entre les fils et le bord des encoches.

Les fils 60 et les enroulements de phase 70 forment des chignons 40, 40' à l'extérieur du paquet de tôles 10, de part et d'autre de celui-ci, comme visible par exemple dans les figure 2B et 10. Ces chignons peuvent être aérés et compacts grâce à la méthode d'insertion selon l'invention.

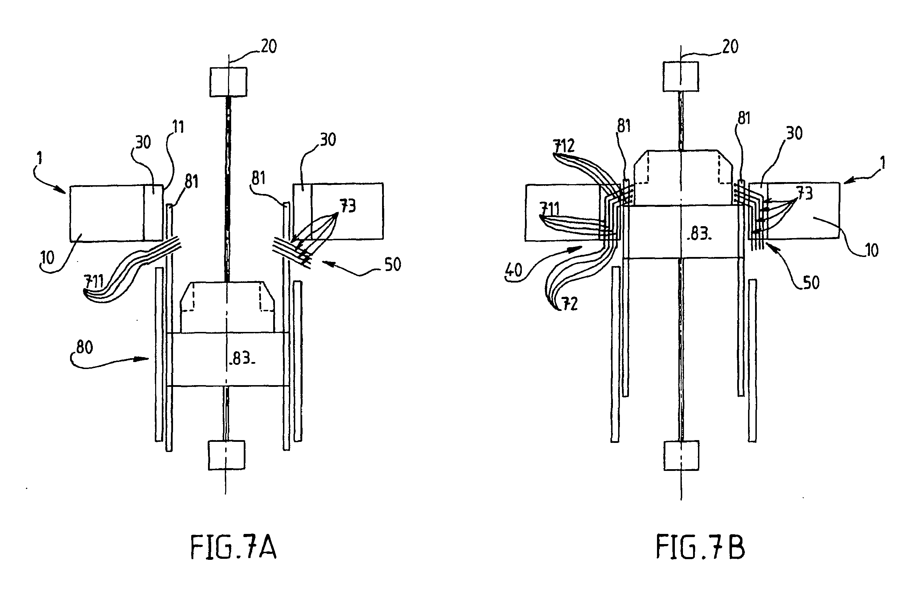

La méthode comprend les étapes suivantes :
1/ mise en forme de chaque enroulement 70,
2/ mise en place des enroulements 70 sur un outil d'insertion 80,
3/ insertion des spires 73 dans les encoches 30 du stator.
Dans la première étape le fil 60 de l'enroulement est conformé en une succession de créneaux 71 reliés par des segments de liaison 72, comme illustré sur la figure 3. Chaque créneau 71 comprend deux branches latérales 711 en regard l'une de l'autre destinées à s'insérer chacune à une position de réception d'une encoche 30, et une branche de tête 712 reliant les deux branches latérales 711.
Les encoches offrent chacune une pluralité de position de réception des branches latérales étagées radialement sur plusieurs niveaux (figures 11A à 11C).
Les segments de liaisons 72 et les branches de tête 712 sont suivant une caractéristique de forme inclinée pour rendre plus compact les chignons 40, 40'et favoriser le passage de l'air.
Ici les segments 72 et les branches 712 ont une forme en V à sommet plat.
Dans la deuxième étape la mise en place des enroulements est, suivant une caractéristique, réalisée sur un outil cylindrique, comme illustrée sur la figure 5. Chaque enroulement 70 constitue plusieurs spires 73 autour de l'outil d'insertion 80.
Les fils 60 et les enroulements de phase 70 sont mieux rangés et mieux soutenus que dans l'outil en forme de roue réceptrice du document US A 4 864 715.
Dans la troisième étape les spires 73 se superposent dans un ordre déterminé.
En outre cela favorise une insertion axiale des enroulements, avantageusement en une seule fois, ou en variante en plusieurs fois.
Dans la troisième phase l'insertion des spires 73 dans les encoches 30 du stator 1 est réalisée en ordre inverse de l'ordre d'enroulement, à l'aide de l'outil 80, les branches latérales 711 de ces spires 73 occupant progressivement des positions radialement plus intérieures au fur et à mesure de l'insertion des spires 73, comme illustré sur les figures 7A et 7B.
On peut réaliser ainsi une insertion régulière ou en variante irrégulière et ce de manière maîtrisée.

On voit sur la figure 5 que l'outil d'insertion 80 comprend une pluralité de doigts 81 parallèles à l'axe de symétrie axiale de l'outil, disposés en cercle, présentant des extrémités libres tournées d'un côté axial supérieur de l'outil, ces doigts étant séparés par des interstices 82.

Lors de la mise en place des enroulements à l'étape 2/, les enroulements 70 sont disposés sur l'outil d'insertion de façon à ce que les branches latérales 711 de chaque créneau 71 soient disposées chacune dans un interstice . 82 et s'étendent essentiellement à l'extérieur du cercle, la branche de tête 712 reliant les branches latérales par un côté intérieur au cercle, les segments de liaison 72 reliant les créneaux par un côté extérieur au cercle.

Les spires 73 sont enfilées par le côté supérieur de l'outil 80 sur les extrémités libres des doigts 81, et sont superposées parallèlement à l'axe de symétrie de l'outil d'insertion 80, les spires mises en place les premières étant disposées du côté inférieur de l'outil et les spires mises en place les dernières étant disposées d'un côté supérieur de l'outil 80.

Les interstices 82 sont en nombre égal aux encoches 30.

A l'étape 3/, les spires 73 sont transférées de l'outil d'insertion 80 au paquet de tôles 10, les branches latérales 711 des créneaux 71 d'une même spire 73 étant insérées dans une pluralité d'encoches 30 réparties régulièrement autour du paquet de tôles 10, ces encoches étant mutuellement séparées par un même nombre d'autres encoches 30. Les branches de tête 712 forment un chignon 40 d'un premier côté axial du paquet de tôles 10, et les segments de liaison 72 forment un autre chignon 40' d'un second côté axial du paquet de tôles 10 opposé au premier.

Les spires 73 sont insérées dans les encoches 30 de façon concentrique, les spires 73 insérées les premières étant disposées radialement à l'extérieur dans le fond des encoches, et les spires 73 insérées les dernières étant disposées radialement à l'intérieur du paquet de tôles 10 au niveau de l'ouverture des encoches.

Selon une caractéristique de l'invention, les enroulements 70 sont enroulés autour de l'outil d'insertion 80 en même temps à l'étape 2/, ce dont il résulte que les spires 73 qui se succèdent dans l'ordre déterminé d'enroulement appartiennent alternativement aux différents enroulements 70.

Dans un mode de réalisation particulièrement avantageux, l'ordre d'enroulement comprend une succession de séquences identiques, chaque séquence étant constituée d'une spire 73 de chaque enroulement 70.

Après insertion des spires 73 dans les encoches 30 à l'étape 3/, on trouve dans le stator, à partir de l'extérieur vers l'intérieur, une première série de spires 73 comprenant une spire 73 de chaque enroulement 70, puis une seconde série de spires identique à la première, puis une troisième, etc...

Les encoches 30 occupées par les branches latérales 711 des spires d'un enroulement 70 donné sont décalées angulairement par rapport aux encoches 30 occupées par les branches latérales 711 des spires des autres enroulements 70 faisant partie de la même série.

Ainsi, dans les chignons 40, 40', les branches de têtes 712 et les segments de liaison 72 des spires d'une même série ne sont pas alignés radialement mais au contraire décalés angulairement les uns par rapport aux autres, comme on le voit sur la figure 2B.

Il en résulte que les branches de têtes 712 et les segments de liaison 72 des spires ne constituent pas dans les chignons 40, 40' des blocs compacts s'opposant à la circulation d'air de refroidissement de la machine électrique tournante.

Selon une autre caractéristique de l'invention, visible sur la figure 5, les créneaux 71 s'étendent dans des plans respectifs parallèles à l'axe de symétrie de l'outil d'insertion 80, ou faiblement inclinés par rapport à cet axe, une fois les spires 73 sont enroulées sur l'outil d'insertion 80.

Cette caractéristique est particulièrement importante du fait que l'étape 3/ d'insertion des enroulements 70 dans les encoches 30 est réalisée par déplacement de l'outil d'insertion 80 le long de l'axe de symétrie 20 du stator 1, c'est-à-dire axialement.

Les doigts 81 définissent le diamètre extérieur de l'outil 80, ce diamètre étant légèrement plus faible que le diamètre intérieur du paquet de tôles 10.

Comme le montrent les figures 7A et 7B, l'outil 80 comprend, outre les doigts 81, un champignon 83 mobile axialement au centre du cylindre constitué par les doigts 81. Le champignon 83 présente un diamètre extérieur pratiquement égal au diamètre intérieur du cylindre constitué par les doigts 81.

L'outil d'insertion 80 est disposé sous le second côté axial du stator 1, son extrémité supérieure étant tournée vers le haut.

L'outil 80 se déplace, ici axialement selon l'axe 20 des figures 7A, 7B, vers le haut pour insérer les spires 73, les doigts 81 et le champignon 83 se déplaçant, ici axialement, parallèlement au cours d'une première phase d'insertion des branches latérales 711 dans les encoches 30, puis au cours d'une seconde phase les doigts 81 restant immobiles alors que le champignon 83 continue à se déplacer.

Au cours de la première phase, le champignon 83 se déplace à la même vitesse que les doigts 81. Les branches latérales 711 pénètrent par le bas dans les encoches 30 et coulissent vers le haut le long des encoches 30. C'est d'abord une portion de la chaque branche latérale 711 s'étendant immédiatement à l'extérieur des doigts 81 qui s'engage dans l'encoche 30 correspondante, puis, progressivement avec le déplacement de l'outil d'insertion 80 vers le haut, toute la branche latérale 711 depuis le doigt jusqu'au segment de liaison 72.

La première phase se termine quand l'extrémité libre des doigts 81 arrive au niveau de la face axiale du paquet de tôles 10 tournée du premier côté.

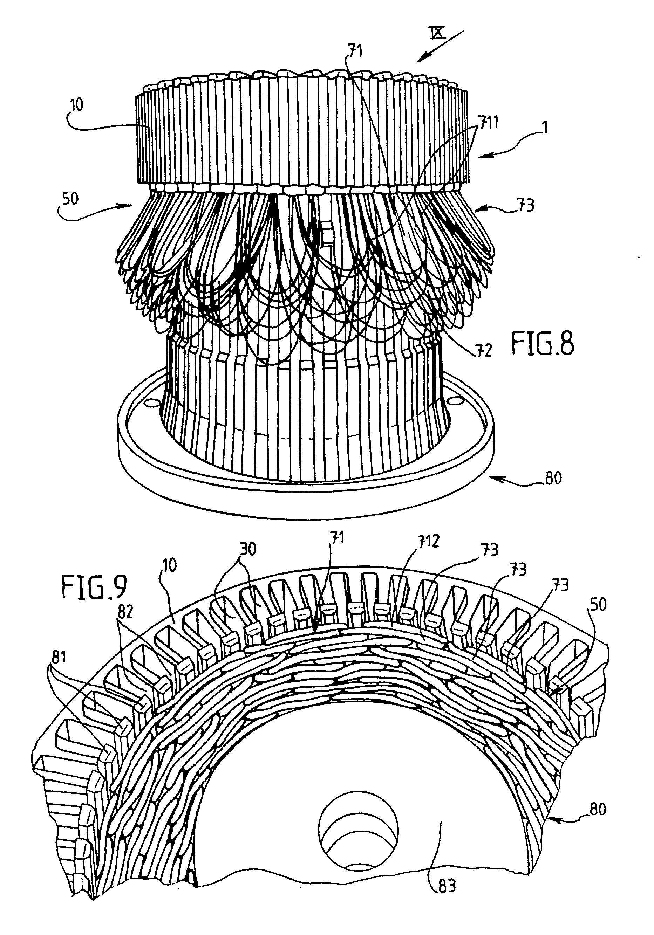

Les doigts 81 s'immobilisent, et le champignon 83 continue à se déplacer, de telle sorte qu'il pousse axialement vers le haut les branches de tête 712, comme le montre la figure 9.

Le champignon 83 pousse directement sur les branches de tête 712 des spires 73 situées le plus bas, ces branches de tête 712 transmettant cet effort aux spires situées plus haut. On comprend donc que le champignon 83 pousse l'ensemble des spires 73, et que celles-ci sont toutes insérées dans les encoches en une seule opération.

Ce mouvement a un double effet. Il permet de faire basculer les branches de têtes 712 au-dessus des extrémités libres des doigts 81, ces branches venant se placer dans le prolongement axial du paquet de tôles 10. Les branches des spires 73 situées en haut basculent les premières, et les branches des spires 73 situées en bas basculent les dernières.

Il permet également de tirer axialement les segments de liaison 72 pour les bloquer en position du second côté du paquet de tôles 10 et former le chignon 40'.

Du fait que les créneaux 71 des enroulements 70 sont disposés sur l'outil d'insertion 80 dans des plans pratiquement parallèles à l'axe de symétrie de cet outil, les branches latérales 711 ne subissent pratiquement pas de torsion quand elles sont insérées dans les encoches 30 et quand les branches de têtes sont basculées au-dessus des extrémités libres des doigts 81.

Par ailleurs, l'ordonnancement des spires 73 autour de l'outil d'insertion 80 permet une transmission très efficace de l'effort de poussée du champignon 83 aux spires 73 les plus éloignées de celui-ci, c'est-à-dire aux spires 73 disposées le plus haut sur l'outil d'insertion 80.

A cet effet, l'ordre d'enroulement des spires 73 permet d'obtenir que chaque branche de tête 712 d'une spire vient en appui sur au moins deux branches de tête 712 de la spire immédiatement supérieure, chacune de ces deux branches de tête 712 venant en appui sur deux autres branches de tête 712 de la spire encore supérieure, et ainsi de suite. L'effort de poussée est ainsi très bien réparti circonférenciellement autour de l'outil d'insertion.

Comme tous les enroulements 70 sont insérés en une seule opération, le champignon doit pouvoir exercer un effort de poussée important sur les branches de tête 712. A cet effet, l'outil d'insertion 83 est muni de deux actionneurs, un actionneur inférieur qui pousse le champignon vers le haut, et un actionneur supérieur qui le tire vers le haut. Le champignon 83 dispose ainsi de la puissance nécessaire pour réaliser la mise en place des branches de tête 712 dans de bonnes conditions.

Selon encore une autre caractéristique particulièrement avantageuse, les branches de tête 712 et les segments de liaison 72 formés à l'étape 1/ présentent des hauteurs axiales croissantes ou décroissantes le long des enroulements 70.

Comme le montre la figure 3, l'enroulement 70 en fin d'étape 1/ s'étend suivant une direction générale longitudinale, les branches latérales 711 s'étendant toutes sensiblement transversalement et étant toutes disposées parallèlement les unes aux autres dans un alignement longitudinal.

Les branches de tête 712 des créneaux 71 sont toutes disposées d'un même côté de l'alignement et sont cintrées, ces branches de tête étant concaves du côté des branches latérales 711.

Les segments de liaison 72 sont disposés d'un côté de l'alignement opposé aux branches de tête 712 et présentent également une forme cintrée de concavité tournée vers les branches latérales 711.

Comme on le constatera sur la figure 3, toutes les branches latérales 711 présentent la même longueur transversalement, mais la hauteur axiale des branches de tête cintrées 712 et des segments de liaison 72 varie le long de l'enroulement 70. On entend par hauteur axiale des branches de tête cintrées 712 et des segments de liaison 72 la hauteur considérée suivant la direction transversale.

De plus, le pas polaire, c'est-à-dire l'écartement longitudinal séparant deux branches latérales 711 consécutives dans l'alignement, est constant le long de tout l'enroulement 70. Exceptionnellement, deux branches latérales 711 peuvent être séparées par un pas différent, à des points singuliers de l'enroulement 70.

Les spires 73 destinées à être insérées les premières dans les encoches 30, et dont les branches latérales 711 sont insérées en positions radialement extérieures de fonds d'encoches 30, présentent en fin d'étape 1/ des branches de tête 712 et des segments de liaison 72 de hauteurs transversale relativement plus grandes que ceux des spires 73 dont les branches latérales 711 occupent des positions radialement intérieures.

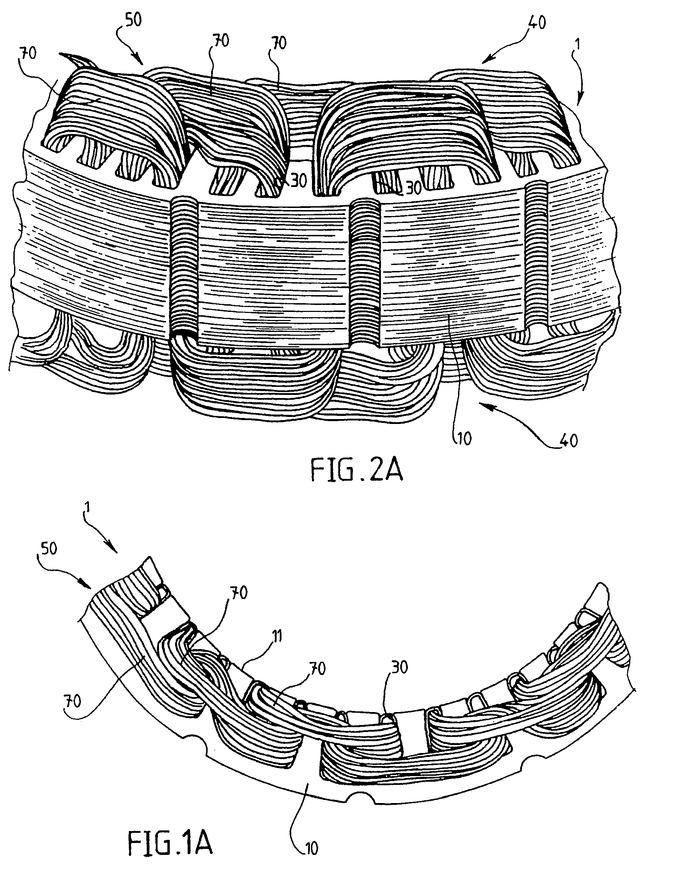

Dans l'exemple de la figure 1, toutes les branches de tête 712 et les segments de liaison 72 d'une même spire 73 présentent une même hauteur.

Cette hauteur décroît régulièrement d'une spire 73 à la suivante le long de l'enroulement 70.

On comprend bien qu'il est nécessaire de garder le même pas polaire tout au long de l'enroulement, de façon à ménager entre les branches 711 un écartement constant correspondant à l'écartement entre les ouvertures des encoches 30 dans lesquelles ces branches vont s'insérer.

La différence de hauteur entre les branches de tête 712 et les segments de liaison 72 des différentes spires 73 d'un même enroulement compense le fait que les branches latérales 711 successives d'une spire extérieure sont disposées en fond d'encoches 30 et sont mutuellement plus écartées que les branches latérales 711 d'une spire intérieure, ces branches étant disposées en entrée d'encoches 30.

Une fois les spires insérées dans le paquet de tôles 10, la branche de tête 712 ou le segment de liaison 72 reliant les deux branches 711 extérieure sera plus ouvert que la branche de tête 712 ou le segment de liaison 72 reliant les deux branches 711 intérieure. Il subira de fait de son ouverture plus grande un aplatissement qui le ramènera à la même hauteur que la branche de tête 712 ou le segment de liaison 72 reliant les deux branches 711 intérieure.

On obtient ainsi des chignons dont tous les éléments présentent la même hauteur axiale, comme le montre la figure 2B.

La variation de hauteur transversale des spires 73 le long d'un enroulement 70 qui vient d'être décrite, et qui vise à compenser les différences d'écartement entre les branches 711 des spires extérieure et intérieure, peut être combinée à une autre variation de hauteur transversale des spires, destinée à obtenir des chignons étagés.

Cette autre variation, qui s'additionne à la première, fait que les branches de tête 712 ou les segments de liaison 72 d'un même chignon vont présenter une hauteur croissante ou décroissante de l'extérieur vers l'intérieur. Le stator de l'art antérieur représenté sur la figure 1A présente un tel étagement des branches de tête 712 et les segments de liaison 72 de ses chignons. Cette configuration des chignons favorise le refroidissement.

Un résultat approchant peut être obtenu à partir d'un stator dont les chignons sont constitués d'éléments de même hauteur, en ajoutant après l'étape 3/ une étape 4/ de mise en forme des chignons par inclinaison mécanique des segments de liaison 72 et/ou des branches de tête 712 vers l'intérieur ou vers l'extérieur.

Cette inclinaison est réalisée par exemple à l'aide d'un mors déplacé radialement vers l'intérieur ou l'extérieur et déformant les segments de liaison 72 et/ou les branches de tête 712.

Selon encore une autre caractéristique avantageuse, la méthode comprend, entre les étapes 1/ et 2/, une étape 1'/ de mise en forme locale du fil 60 dans des zones 61 de ce fil destinées à croiser les fils 60 d'autres enroulements 70, ou d'autres zones du même fil, une fois les enroulements 70 insérés dans le stator.

Ces zones 61 sont repérées par des cercles sur la figure 4.

La mise en forme locale du fil 60 consiste à déformer localement la section du fil 60, ou à courber localement le fil 60.

La déformation vise à aplatir localement la section, pour la rendre moins épaisse dans une direction déterminée, mais sans réduire la section totale de passage du courant. Les zones de croisement 61 des fils 60 sont superposées suivant ladite direction déterminée, de telle sorte que l'encombrement des deux fils 60 empilés est réduit. Dans le cas d'un fil 60 de section ronde, l'aplatissement conduit typiquement à former une section ovale.

L'aplatissement de la zone 61 peut être réalisé par pincement à l'aide de pinces adaptées, par matriçage dans une presse équipée d'un moule adapté, ou par moletage à l'aide d'un outil tournant.

Conférer une courbure locale à une zone 61 du fil 60 permet de décaler le point de croisement des fils en un endroit moins encombré du chignon 40, où l'espace disponible est suffisant pour permettre le croisement des fils 60.

Cette courbure est réalisée à l'aide de crochets déformant localement le fil par traction sur celui-ci.

On sait que le fil 60 présente typiquement une section ronde. De façon à faciliter le rangement des branches latérales 711 dans les encoches 30 et à augmenter la densité de cuivre dans ces encoches, on choisit pour ces encoches 30 une largeur circonférencielle multiple du diamètre du fil.

Cette largeur est typiquement égale à une fois ou deux fois le diamètre du fil 60. En variante la largeur de l'encoche est supérieure à deux fois le diamètre du fil, par exemple 3 ou 4 fois le diamètre.

Dans le cas où les encoches 30 présentent une largeur circonférencielle correspondant au diamètre du fil 60, la branche latérale 711 occupant la position la plus radialement intérieure, c'est-à-dire la plus proche de la périphérie interne du paque de tôles 10, est déformée par élargissement suivant une direction circonférencielle, comme le montre la figure 11A. Ladite branche latérale 711 est en appui sur les deux faces radiales opposées de l'encoche et est ainsi bloquée en position dans l'encoche 30. Les branches latérales 711 occupant les autres positions sont ainsi maintenues à l'intérieur de l'encoche 30.

Cette déformation est pratiquée après l'étape 3/ d'insertion, typiquement en trois points de la branche latérale 711. Elle conduit à transformer la section ronde du fil en une section ovale.

Dans le cas où les encoches 30 présentent une largeur circonférencielle égale à au moins deux diamètres du fil 60 (figure 11B), ces encoches 30 présentent d'un côté radialement interne une ouverture 31 partiellement obturée de deux côté opposés par deux redans axiaux 32, appelés également pieds de dents, faisant saillie à partir des dents 35. Les branches latérales 711 occupant chaque encoche 30 sont maintenues à l'intérieur de celle-ci par une cale plate 33 en appui sur les redans 32 d'un côté intérieur de l'encoche 30, comme le montre la figure 11B.

Cette cale 33 s'étend sur toute la longueur axiale de l'encoche 30 et présente une forme rectangulaire.

On notera que dans le cas d'encoches 30 de largeur correspondant à un diamètre de fil 60, il n'est pas nécessaire que les dents 35 portent des redans 33 et les cales 33 peuvent être supprimées. On simplifie ainsi la construction du paquet de tôles 10 et le procédé d'insertion des enroulements 70 dans les encoches 30.

Enfin, toujours dans le souci de faciliter le rangement des branches latérales 711 dans les encoches 30, les encoches 30 peuvent présenter une profondeur radiale multiple du diamètre du fil 60.

Comme le montrent les figures 11A et 11B, les dimensions choisies pour les encoches 30 font que les branches latérales 711 du fil 60 viennent normalement se ranger en plusieurs alignements radiaux bien ordonnés à l'étape 3/ d'insertion dans les encoches 30.

On comprend donc bien que la méthode décrite ci-dessus procure de multiples avantages.

Le temps de cycle est court puisque l'insertion de tous les enroulements de phase est réalisée en une seule opération.

Par ailleurs, les opérations de préparation des enroulements sont particulièrement minutieuses et soignées. Les étapes 1/ et 1'/ permettent, à l'issue de l'étape 3/ d'insertion, d'obtenir des chignons bien ordonnés, présentant peu de défauts. Les opérations avales de contrôle qualité et de correction des défauts sont grandement accélérés, et le temps de cycle est réduit.

La formation des chignons se fait en bon ordre du fait que l'effort de poussée du champignon est bien transmis des spires disposées en bas sur l'outil d'insertion aux spires disposées en haut. Cet effort est réparti de façon régulière sur toute la circonférence de l'outil.

Enfin, cette méthode est adaptée aux outillages existants et ne demande que peu de modifications de ceux-ci.

Les stators conformes à l'invention présentent également des avantages.

Du fait de l'alternance des spires des différents enroulements dans l'ordre d'insertion, les chignons sont particulièrement aérés. Le refroidissement des chignons est ainsi grandement facilité. Le débit d'air de refroidissement à travers les chignons peut alors dépasser 10 litres par seconde.

Les fils conducteurs étant, de manière précitée, en cuivre, la densité de cuivre dans les encoches peut être augmentée jusqu'à 65%, cette densité étant le rapport entre la surface de la section des branches latérales non isolées sur la section de l'encoche non isolée. Cette densité est limitée à 45 à 50% dans les stators de l'art antérieur.

Ce résultat est l'effet combiné de plusieurs aspects de l'invention.

Il est obtenu d'abord du fait que l'insertion des branches latérales dans les encoches se fait de façon ordonnée.

Il résulte également de la bonne préparation des zones de croisement des fils, qui permet de bien ranger le chignon et donc de bien optimiser la position des branches latérales 711 dans les encoches.

Enfin, le choix des dimensions des encoches, la suppression des cales ou l'utilisation de cales de forme rectangulaire en remplacement des cales en U de l'art antérieur, participent également à l'obtention de ce résultat.

On notera que le positionnement sensiblement vertical des créneaux des spires sur l'outil d'insertion, combiné au fait que l'insertion des spires dans les encoches se fait par un déplacement axial de l'outil, permet de ne pratiquement pas déformer les fils pendant l'insertion. Ainsi, les zones de croisement 61, qui subissent une mise en forme particulière avant insertion, ne sont pas déformées et viennent s'ordonner correctement dans les chignons du rotor.

La méthode décrite ci-dessus est adaptée à des stators comprenant un nombre quelconque d'encoches et à des bobinages comprenant un nombre quelconque d'enroulements de phase. Elle est particulièrement adaptée à un stator comprenant de 36 à 96 encoches, correspondant à un rotor de 6 à 8 pôles, et à un bobinage comprenant de 3 à 6 enroulements de phase.

Le bobinage peut être de type ondulé simple ou de type ondulé réparti.

La méthode est adaptée à tous les diamètres de fil, ici de forme cylindrique à section ronde ou en variante carrée, et tous les diamètres de stators usuels pour les stators d'alternateur de véhicules automobiles.

On appréciera que le stator selon l'invention est avantageusement destiné à être monté dans un alternateur à ventilateur interne tel que décrit par exemple dans le document EP-A-0515 259. Un tel alternateur comporte un stator entourant un rotor, par exemple un rotor à griffes ou un rotor à pôles saillants.

Le rotor est solidaire d'un arbre monté à rotation centralement par l'intermédiaire de roulements à billes dans un carter en deux parties appelés palier avant et palier arrière. Les paliers sont creux et présentent chacun un fond doté d'ouvertures, pour formation d'entrées d'air, et un rebord périphérique également doté d'ouvertures pour formation de sortie d'air. Les fonds des paliers sont globalement d'orientation transversale et portent centralement un roulement à billes pour le montage à rotation de l'arbre de support du rotor. Les fonds sont prolongés à leur périphérie extérieure chacun par le rebord périphérique globalement d'orientation axiale et épaulé pour montage du corps du stator portant le bobinage à pluralité d'enroulements de phase dont les chignons s'étendent en saillie axiale de part et d'autre du corps du stator et ce en dessous des ouvertures des rebords périphériques des paliers assemblés par exemple à l'aide de vis ou de tirants, pour formation du carter de logement du stator et du rotor. Le rotor porte à au moins l'une de ses extrémités axiales un ventilateur implanté radialement en dessous du chignon concerné. Le palier arrière porte au moins un porte balais, tandis qu'une poulie, solidaire de l'arbre de support du rotor, est adjacente au palier avant. Pour les autres constituants de l'alternateur on se reportera au document précité, sachant que le rotor à griffes et à bobinage d'excitation peut être remplacé par un stator à pôles saillants portant plusieurs bobinages d'excitation. Un pont redresseur, par exemple à diodes, est relié aux enroulements des phases. En variante ce pont redresseur est conformé pour former également un onduleur, comme décrit par exemple dans le document FR-A-2 745 444, pour injecter du courant dans les enroulements de phase du stator afin de faire fonctionner l'alternateur en moteur électrique notamment pour démarrer le moteur thermique du véhicule automobile, un tel alternateur tant appelé alterno-démarreur.

Dans tous les cas, lorsque l'arbre de support du rotor tourne, le ou les ventilateurs permettent de créer un courant d'air entre les ouvertures d'entrée et de sortie d'air traversant les chignons du bobinage selon l'invention. Plus précisément, l'étape de préparation des fils séparément, puis l'étape d'organisation des enroulements de phase avant leur insertion dans les encoches permet de donner aux têtes, appelées chignons, du bobinage du stator des caractéristiques symétriques permettant de créer dans les chignons des orifices de passage d'air et des pentes qui améliorent la circulation de l'air au travers des chignons, par exemple au dessus de 10 litres par seconde.

Bien entendu, un chignon peut être en variante plus haut axialement que l'autre grâce à l'outil selon l'invention.

Bien entendu, les isolants d'encoche sont placés et avantageusement fixés dans les encoches avant les insertions des fils dans les encoches. Dans les figures 11A et 11B on n'a pas représenté par simplicité l'isolant d'encoche visible dans les figures 1A, 2B, 9 et 11C.

La section des fils conducteurs peut être ronde, comme dans les figures, ou carrée, ou rectangulaire ou elliptique ou autre.

Le corps du stator est dans les figures de forme cylindrique. En variante la périphérie extérieure du corps du stator est de forme non cylindrique par exemple en forme de tonneau. Les encoches, formées dans chaque tôle du paquet de tôles sont en variante inclinées par rapport à la direction axiale.

Grâce à l'invention la machine électrique tournante polyphasée équipée du stator à bobinage selon l'invention est plus puissante.

Chaque enroulement de phase comporte un ou plusieurs fils. Par exemple chaque enroulement de phase peut comporter deux fils au moins.

## Revendications

1. Méthode d'insertion d'un bobinage ondulé dans un stator d'une machine électrique tournante polyphasée, le stator (1) comprenant un paquet de tôles (10) troué centralement et présentant un axe de symétrie (20) et des encoches (30) axialement traversantes ménagées dans une face radialement interne du paquet de tôles (10), ces encoches (30) offrant une pluralité de positions de réception étagées radialement, le bobinage comprenant une pluralité d'enroulements de phase (70) constitués chacun d'un fil (60) continu électriquement conducteur, la méthode comprenant les étapes suivantes :
1/ mise en forme de chaque enroulement (70), le fil (60) de celui-ci étant conformé en une succession de créneaux (71) reliés par des segments de liaison (72), chaque créneau comprenant deux branches latérales (711) en regard l'une de l'autre destinées à s'insérer chacune à une position de réception d'une encoche (30), et une branche de tête (712) reliant les deux branches latérales (711);
2/ mise en place des enroulements (70) sur un outil d'insertion (80) ;
3/ insertion des spires (73) dans les encoches (30) du stator,
**caractérisée en ce que** l'étape 2/ de mise en place des enroulements est réalisée sur un outil d'insertion (80) cylindrique, chaque enroulement (70) constituant plusieurs spires (73) autour de l'outil d'insertion (80), ces spires (73) se superposant dans un ordre déterminé,
et **en ce que** les enroulements (70) sont enroulés autour de l'outil d'insertion (80) en même temps, les spires (73) qui se succèdent dans ledit ordre déterminé d'enroulement appartenant alternativement aux différents enroulements (70).

2. Méthode selon la revendication 1, **caractérisée en ce que** l'étape 3/ d'insertion des spires (73) dans les encoches (30) du stator est réalisée en ordre inverse de l'ordre d'enroulement, les branches latérales (711) de ces spires (73) occupant progressivement des positions radialement plus intérieures ,

3. Méthode selon la revendication 1 ou 2, **caractérisé en ce que** l'ordre d'enroulement comprend une succession de séquences identiques, chaque séquence étant constituée d'une spire (73) de chaque enroulement (70).

4. Méthode selon l'une quelconque des revendications précédentes, **caractérisée en ce que**, sur l'outil d'insertion (80), les créneaux (71) s'étendent dans des plans respectifs parallèles à l'axe de symétrie de l'outil d'insertion (80), ou faiblement inclinés par rapport à cet axe.

5. Méthode selon l'une quelconque des revendications précédentes, **caractérisée en ce que** l'étape 3/ d'insertion des enroulements (70) dans les encoches (30) est réalisée par déplacement de l'outil d'insertion (80) le long de l'axe de symétrie (20) du stator (1).

6. Méthode selon l'une quelconque des revendications précédentes, **caractérisée en ce que** les branches de tête (712) des créneaux (71) sont cintrées et forment un chignon (40) d'un premier côté axial du stator (1).

7. Méthode selon la revendication 6, **caractérisée en ce que** les segments de liaison (72) relient deux branches latérales (711) respectives de deux créneaux (71) voisins le long du fil (60) et présentent une forme cintrée, ces segments formant un chignon (40) d'un second côté axial du stator (1) opposé au premier.

8. Méthode selon la revendication 7, **caractérisée en ce que** les branches de tête (712) et/ou les segments de liaison (72) formés à l'étape 1/ présentent des hauteurs croissantes ou décroissantes le long des enroulements (70).

9. Méthode selon la revendication 8, **caractérisée en ce que** les spires (73) dont les branches latérales (711) sont insérées en positions radialement extérieures de fonds d'encoches (30) présentent des branches de tête (712) et/ou des segments de liaison (72) de hauteurs relativement plus grandes que les spires (73) dont les branches latérales (711) occupent des positions radialement intérieures.

10. Méthode selon l'une quelconque des revendications 7 à 9, **caractérisée en ce qu'**elle comprend après l'étape 3/ une étape 4/ de mise en forme des chignons (40) par inclinaison des segments de liaison (72) et/ou des branches de tête (712) vers l'intérieur.

11. Méthode selon l'une quelconque des revendications 7 à 9, **caractérisée en ce qu'**elle comprend après l'étape 3/ une étape 4/ de mise en forme des chignons (40) par inclinaison des segments de liaison (72) et/ou des branches de tête (712) vers l'extérieur.

12. Méthode selon l'une quelconque des revendications précédentes, **caractérisée en ce qu'**elle comprend, entre les étapes 1/ et 2/, une étape 1'/ de mise en forme locale du fil (60) dans des zones (61) de ce fil destinées à croiser d'autres fils (60), ou d'autres zones du même fil (60), une fois les enroulements (70) insérés dans le stator (1).

13. Méthode selon l'une quelconque des revendications précédentes, **caractérisée en ce que** le fil (60) présente une section ronde, les encoches (30) présentant une largeur circonférencielle multiple du diamètre du fil (60).

14. Méthode selon la revendication 13, **caractérisée en ce que** les encoches (30) présentent une largeur circonférencielle correspondant au diamètre du fil (60), la branche latérale (711) occupant la position la plus radialement intérieure étant déformée par élargissement suivant une direction circonférencielle de manière à maintenir les branches latérales (711) occupant les autres positions à l'intérieur de l'encoche (30).

15. Méthode selon la revendication 13, **caractérisée en ce que** les encoches (30) présentent une largeur circonférencielle égale à au moins deux diamètres du fil (60) et présentent d'un côté radialement interne une ouverture (31) partiellement obturée de deux côté opposés par deux redans axiaux (32), les branches latérales (711) occupant les encoches étant maintenues à l'intérieur de celle-ci par une cale plate (33) en appui sur les redans (32) d'un côté intérieur de l'encoche (30) .

16. Stator de machine électrique tournante polyphasée, comprenant un paquet de tôles (10) troué centralement présentant un axe de symétrie (20), des encoches (30) axialement traversantes ménagées dans une face radialement interne du paquet de tôles (10) offrant chacune une pluralité de positions de réception étagées radialement, et un bobinage (50) comprenant une pluralité d'enroulements de phase (70) constitués chacun d'un fil (60) continu électriquement conducteur ;
le fil de chaque enroulement (70) étant conformé en une succession de créneaux (71) reliés par des segments de liaison (72), chaque créneau comprenant deux branches latérales (711) en regard l'une de l'autre venant s'insérer chacune à une position de réception d'une encoche (30), et une branche de tête (712) reliant les deux branches latérales (711);
chaque enroulement (70) constituant plusieurs spires (73) autour du stator (1) ;
**caractérisé en ce que** les spires (73) des enroulements (70) étant insérées dans les encoches (30) dans un ordre déterminé, les branches latérales (711) de ces spires (73) occupant progressivement des positions radialement plus intérieures, et **en ce que** les spires (73) qui se succèdent dans ledit ordre déterminé appartiennent alternativement aux différents enroulements (70).

17. Stator selon la revendication 16, **caractérisé en ce que** l'ordre déterminé comprend une succession de séquences identiques, chaque séquence étant constituée d'une spire (73) de chaque enroulement (70).

18. Stator selon la revendication 16 ou 17, **caractérisé en ce que** le fil (60) est mis en forme localement dans des zones (61) de ce fil croisant d'autres fils (60) ou d'autres zones du même fil (60).

## Claims

1. Method for insertion of an undulating winding in a stator of a polyphase rotary electrical machine, the stator (1) comprising a set of plates (10) which have holes in their centre and have an axis of symmetry (20) and axially through notches (30) provided in a radially inner surface of the set of plates (10), these notches (30) providing a plurality of reception positions which are stepped radially, the winding comprising a plurality of phase coils (70) each consisting of a continuous electrically conductive wire (60), the method comprising the following steps:
1. forming each coil (70), the wire (60) of the latter being shaped in a succession of pinnacles (71) which are connected by connection segments (72), each pinnacle comprising two lateral branches (711) opposite one another which are each designed to be inserted in a position of reception of a notch (30), and a head branch (712) which connects the two lateral branches (711);
2. putting coils (70) into place on an insertion tool (80);
3. inserting turns (73) into the notches (30) of the stator,
**characterised in that** the step 2. of putting the coils into place is carried out on a cylindrical insertion tool (80), each coil (70) constituting a plurality of turns (73) around the insertion tool (80), these turns (73) being superimposed in a predetermined order, and **in that** the coils (70) are coiled around the insertion tool (80) at the same time, the turns (73) which succeed one another in the said predetermined coiling order belonging alternately to the different coils (70).

2. Method according to claim 1, **characterised in that** the step 3. of insertion of the turns (73) in the notches (30) in the stator is carried out in the order which is the inverse of that of the coiling order, the lateral branches (711) of these turns (73) occupying progressively positions which are radially increasingly further to the interior.

3. Method according to claim 1 or claim 2, **characterised in that** the coiling order comprises a succession of identical sequences, each sequence consisting of a turn (73) of each coil (70).

4. Method according to any one of the preceding claims, **characterised in that**, on the insertion tool (80), the pinnacles (71) extend on respective planes parallel to the axis of symmetry of the insertion tool (80), or slightly inclined relative to this axis.

5. Method according to any one of the preceding claims, **characterised in that** the step 3. of insertion of the coils (70) in the notches (30) is carried out by displacement of the insertion tool (80) along the axis of symmetry (20) of the stator (1).

6. Method according to any one of the preceding claims, **characterised in that** the head branches (712) of the pinnacles (71) are curved and form a leading-out wire (40) of a first axial side of the stator (1).

7. Method according to claim 6, **characterised in that** the connection segments (72) connect two respective lateral branches (711) of two adjacent pinnacles (71) along the wire (60) and have a curved form, these segments forming a leading-out wire (40) of a second axial side of the stator (1) opposite the first.

8. Method according to claim 7, **characterised in that** the head branches (712) and/or the connection segments (72) formed in the step 1. have heights which increase or decrease along the coils (70).

9. Method according to claim 8, **characterised in that** the turns (73), the lateral branches (711) of which are inserted in positions radially on the exterior of bases of notches (30), have head branches (712) and/or connection segments (72) with heights which are relatively greater than the turns (73), the lateral branches (711) of which occupy radially interior positions.

10. Method according to any one of claims 7 to 9, **characterised in that**, after the step 3., it comprises a step 4. of forming of leading-out wires (40) by inclination of the connection segments (72) and/or of the head branches (712) towards the interior.

11. Method according to any one of claims 7 to 9, **characterised in that**, after the step 3. it comprises a step 4. of forming of leading-out wires (40) by inclination of the connection segments (72) and/or of the head branches (712) towards the exterior.

12. Method according to any one of the preceding claims, **characterised in that**, between steps 1. and 2., it comprises a step 1'. of local forming of the wire (60) in areas (61) of this wire which are designed to cross other wires (60), or other areas of the same wire (60), once the coils (70) are inserted in the stator (1).

13. Method according to any one of the preceding claims, **characterised in that** the wire (60) has a round cross-section, the notches (30) having a circumferential width which is a multiple of the diameter of the wire (60).

14. Method according to claim 13, **characterised in that** the notches (30) have a circumferential width which corresponds to the diameter of the wire (60), the lateral branch (711) which occupies the radially innermost position being deformed by widening in a circumferential direction, such as to keep the lateral branches (711) occupying the other positions inside the notch (30).

15. Method according to claim 13, **characterised in that** the notches (30) have a circumferential width which is equal to at least two diameters of the wire (60), and have on a radially inner side an opening (31) which is partially shut on two opposite sides by two axial steps (32), the lateral branches (711) which occupy notches being kept on the interior of the opening by a flat wedge (33) which is supported on the steps (32) on an inner side of the notch (30).

16. Polyphase rotary electrical machine stator, comprising a set of plates (10) which have holes in their centre and have an axis of symmetry (20), axially through notches (30) provided in a radially inner surface of the set of plates (10) each providing a plurality of radially stepped reception positions, and a winding (50) comprising a plurality of phase coils (70) each consisting of a continuous electrically conductive wire;
the wire (60) of each winding (70) being shaped in a succession of pinnacles (71) which are connected by connection segments (72), each pinnacle comprising two lateral branches (711) opposite one another which are each inserted in a position of reception of a notch (30), and a head branch (712) which connects the two lateral branches (711);
each coil (70) constituting a plurality of turns (73) around the stator (1);
**characterised in that** the turns (73) of the coils (70) are inserted in the notches (30) in a predetermined order, the lateral branches (711) of these turns (73) occupy progressively positions which are radially increasingly further to the interior, and the turns (73) which succeed one another in the said predetermined coiling order belong alternately to the different coils (70).

17. Stator according to claim 16, **characterised in that** the predetermined order comprises a succession of identical sequences, each sequence being constituted by a turn (73) of each coil (70).

18. Stator according to claim 16 or claim 17, **characterised in that** the wire (60) is formed locally in areas (61) of this wire which cross other wires (60) or other areas of the same wire (60).

## Patentansprüche

1. Verfahren zum Einsetzen einer wellenförmigen Spule in einen Stator einer rotierenden elektrischen Mehrphasenmaschine, wobei der Stator (1) ein mittig gelochtes Blechpaket (10) umfasst, das eine Symmetrieachse (20) und axial durchgehende Nuten (30) aufweist, die in eine radial innere Fläche des Blechpakets (10) eingearbeitet sind, wobei diese Nuten (30) eine Mehrzahl von radial abgestuften Aufnahmepositionen enthalten, während die Spule eine Mehrzahl von Phasenwicklungen (70) umfasst, die jeweils aus einem durchgehenden elektrisch leitenden Draht (60) bestehen, wobei das Verfahren die folgenden Schritte beinhaltet:
1) Formung jeder Wicklung (70), wobei deren Draht (60) als eine Folge von durch Verbindungssegmente (72) verbundenen Auszackungen (71) gestaltet ist, wobei jede Auszackung zwei einander gegenüberliegende Seitenschenkel (711), die dazu bestimmt sind, jeweils in eine Aufnahmeposition einer Nut (30) eingesetzt zu werden, und einen Kopfschenkel (712) aufweist, der die beiden Seitenschenkel (711) verbindet;
2) Anbringung der Wicklungen (70) auf einem Einsetzwerkzeug (80);
3) Einsetzen der Windungen (73) in die Nuten (30) des Stators,
**dadurch gekennzeichnet, dass** der Schritt 2) zur Anbringung der Wicklungen auf einem zylindrischen Einsetzwerkzeug (80) stattfindet, wobei jede Wicklung (70) mehrere Windungen (73) um das Einsetzwerkzeug (80) herum bildet, wobei diese Windungen (73) in einer bestimmten Reihenfolge übereinandergelegt werden,
und dass die Wicklungen (70) gleichzeitig um das Einsetzwerkzeug (80) herum gewickelt werden, wobei die Windungen (73), die in der besagten bestimmten Wicklungsreihenfolge aufeinanderfolgen, abwechselnd zu den verschiedenen Wicklungen (70) gehören.

2. Verfahren nach Anspruch 1, **dadurch gekennzeichnet, dass** Schritt 3) zum Einsetzen der Windungen (73) in die Nuten (30) des Stators in umgekehrter Reihenfolge zur Wicklungsreihenfolge erfolgt, wobei die Seitenschenkel (711) dieser Windungen (73) fortschreitend radial weiter innen gelegene Positionen einnehmen.

3. Verfahren nach Anspruch 1 oder 2, **dadurch gekennzeichnet, dass** die Wicklungsreihenfolge eine Folge identischer Sequenzen umfasst, wobei jede Sequenz aus einer Windung (73) jeder Wicklung (70) besteht.

4. Verfahren nach einem der vorangehenden Ansprüche, **dadurch gekennzeichnet, dass** sich auf dem Einsetzwerkzeug (80) die Auszackungen (71) in Ebenen erstrecken, die jeweils parallel zur Symmetrieachse des Einsetzwerkzeugs (80) verlaufen oder im Verhältnis zu dieser Achse leicht geneigt sind.

5. Verfahren nach einem der vorangehenden Ansprüche, **dadurch gekennzeichnet, dass** Schritt 3) zum Einsetzen der Wicklungen (70) in die Nuten (30) durch Verschiebung des Einsetzwerkzeugs (80) entlang der Symmetrieachse (20) des Stators (1) erfolgt.

6. Verfahren nach einem der vorangehenden Ansprüche, **dadurch gekennzeichnet, dass** die Kopfschenkel (712) der Auszackungen (71) gewölbt sind und einen Wicklungskopf (40) auf einer ersten axialen Seite des Stators (1) bilden.

7. Verfahren nach Anspruch 6, **dadurch gekennzeichnet, dass** die Verbindungssegmente (72) jeweils zwei Seitenschenkel (711) zweier benachbarter Auszackungen (71) am Draht (60) entlang verbinden und eine gewölbte Form aufweisen, wobei diese Segmente einen Wicklungskopf (40) auf einer zweiten axialen Seite des Stators (1) gegenüber der ersten Seite bilden.

8. Verfahren nach Anspruch 7, **dadurch gekennzeichnet, dass** die Kopfschenkel (712) und/oder die Verbindungssegmente (72), die in Schritt 1) gebildet werden, zunehmende oder abnehmende Höhen entlang den Wicklungen (70) aufweisen.

9. Verfahren nach Anspruch 8, **dadurch gekennzeichnet, dass** die Windungen (73), deren Seitenschenkel (711) in radial äußere Positionen von Nutengründen (30) eingesetzt werden, Kopfschenkel (712) und/oder Verbindungssegmente (72) mit relativ größeren Höhen als die Windungen (73) aufweisen, deren Seitenschenkel (711) radial innere Positionen einnehmen.

10. Verfahren nach einem der Ansprüche 7 bis 9, **dadurch gekennzeichnet, dass** es nach Schritt 3) einen Schritt 4) zur Formung der Wicklungsköpfe (40) durch Neigung der Verbindungssegmente (72) und/oder der Kopfschenkel (712) nach innen umfasst.

11. Verfahren nach einem der Ansprüche 7 bis 9, **dadurch gekennzeichnet, dass** es nach Schritt 3) einen Schritt 4) zur Formung der Wicklungsköpfe (40) durch Neigung der Verbindungssegmente (72) und/oder der Kopfschenkel (712) nach außen umfasst.

12. Verfahren nach einem der vorangehenden Ansprüche, **dadurch gekennzeichnet, dass** es zwischen den Schritten 1) und 2) einen Schritt 1') zur örtlichen Formung des Drahts (60) in Bereichen (61) dieses Drahts umfasst, die dazu bestimmt sind, andere Drähte (60) oder andere Bereiche desselben Drahts (60) zu kreuzen, nachdem die Wicklungen (70) in den Stator (1) eingesetzt sind.

13. Verfahren nach einem der vorangehenden Ansprüche, **dadurch gekennzeichnet, dass** der Draht (60) einen runden Querschnitt aufweist, während die Nuten (30) eine Umfangsbreite aufweisen, die einem Mehrfachen des Durchmessers des Drahts (60) entspricht.

14. Verfahren nach Anspruch 13, **dadurch gekennzeichnet, dass** die Nuten (30) eine Umfangsbreite entsprechend dem Durchmesser des Drahts (60) aufweisen, wobei der Seitenschenkel (711), der die radial am weitesten innen gelegene Position einnimmt, durch Verbreiterung entlang einer Umfangsrichtung verformt wird, so dass die Seitenschenkel (711), die die anderen Positionen einnehmen, im Innern der Nut (30) gehalten werden.

15. Verfahren nach Anspruch 13, **dadurch gekennzeichnet, dass** die Nuten (30) eine Umfangsbreite mindestens gleich zwei Durchmessern des Drahts (60) haben und auf einer radial inneren Seite eine Öffnung (31) aufweisen, die auf zwei gegenüberliegenden Seiten teilweise durch zwei axiale Absätze (32) verschlossen ist, wobei die Seitenschenkel (711), die die Nuten belegen, durch einen flachen Keil (33), der auf den Absätzen (32) auf einer inneren Seite der Nut (30) zur Anlage kommt, im Innern dieser Nut (30) gehalten werden.

16. Stator einer rotierenden elektrischen Mehrphasenmaschine, umfassend ein mittig gelochtes Blechpaket (10), das eine Symmetrieachse (20) und axial durchgehende Nuten (30) aufweist, die in eine radial innere Fläche des Blechpakets (10) eingearbeitet sind und jeweils eine Mehrzahl von radial abgestuften Aufnahmepositionen enthalten, und eine Spule (50) mit einer Mehrzahl von Phasenwicklungen (70), die jeweils aus einem durchgehenden elektrisch leitenden Draht (60) bestehen;
wobei der Draht jeder Wicklung (70) als eine Folge von durch Verbindungssegmente (72) verbundenen Auszackungen (71) gestaltet ist,
wobei jede Auszackung zwei einander gegenüberliegende Seitenschenkel (711), die jeweils in eine Aufnahmeposition einer Nut (30) eingesetzt werden, und einen Kopfschenkel (712) aufweist, der die beiden Seitenschenkel (711) verbindet;
wobei jede Wicklung (70) mehrere Windungen (73) um den Stator (1) herum bildet;
**dadurch gekennzeichnet, dass** die Windungen (73) der Wicklungen (70) in die Nuten (30) in einer bestimmten Reihenfolge eingesetzt werden, wobei die Seitenschenkel (711) dieser Windungen (73) fortschreitend radial weiter innen gelegene Positionen einnehmen, und dass die Windungen (73), die in der besagten bestimmten Reihenfolge aufeinanderfolgen, abwechselnd zu den verschiedenen Wicklungen (70) gehören.

17. Stator nach Anspruch 16, **dadurch gekennzeichnet, dass** die bestimmte Reihenfolge eine Folge identischer Sequenzen umfasst, wobei jede Sequenz aus einer Windung (73) jeder Wicklung (70) besteht.

18. Stator nach Anspruch 16 oder 17, **dadurch gekennzeichnet, dass** der Draht (60) örtlich in den Bereichen (61) dieses Drahts geformt wird, die andere Drähte (60) oder andere Bereiche desselben Drahts (60) kreuzen.
